# EUROPÄISCHE PATENTSCHRIFT

(11) **EP 1 115 927 B1**
(45) Veröffentlichungstag und Bekanntmachung des Hinweises auf die Patenterteilung: **18.02.2004**
(21) Anmeldenummer: 99944153.8
(22) Anmeldetag: 14.09.1999
(51) Int. Cl.: D01F 13/02, D01F 2/00, C08J 11/02

(54) **VERFAHREN ZUR AUFARBEITUNG BZW. REINIGUNG VON WÄSSERIGEN LÖSUNGEN EINES TERTIÄREN AMINOXIDES**
METHOD FOR PREPARING OR PURIFYING AQUEOUS SOLUTIONS OF A TERTIARY AMINO-OXIDE
PROCEDE DE TRAITEMENT ET DE PURIFICATION DE SOLUTIONS AQUEUSES D'UN AMINOXYDE TERTIAIRE

(30) Priorität: 15.09.1998 AT 154898
(43) Veröffentlichungstag der Anmeldung: 18.07.2001
(73) Patentinhaber: LENZING AKTIENGESELLSCHAFT, 4860 Lenzing (AT)
(72) Erfinder: MÄNNER, Johann, A-4852 Weyregg (AT); EMEDER, Rudolf, A-4863 Seewalchen (AT); HAGER, Christian, A-4863 Seewalchen (AT); NUSSBAUMER, Franz, A-4870 Vöcklamarkt (AT); ENDL, Thomas, A-4840 Vöcklabruck (AT); KNEISSL, Johannes, A-4852 Weyregg (AT)
(74) Vertreter: Schwarz, Albin, Dr.
(86) Internationale Anmeldenummer: PCT/AT1999/000222
(87) Internationale Veröffentlichungsnummer: WO 2000/015887

(56) Entgegenhaltungen:
- WO-A-97/07268
- DE-A- 3 900 731

## Beschreibung

Die Erfindung betrifft ein Verfahren gemäß dem Oberbegriff des Patentanspruches 1.

In den letzten Jahrzehnten wurden bedingt durch die Umweltproblematik des bekannten Viskoseverfahrens zur Herstellung cellulosischer Fasern intensive Anstrengungen unternommen, alternative, umweltfreundlichere Verfahren zur Verfügung zu stellen. Als eine besonders interessante Möglichkeit hat sich dabei in den letzten Jahren herauskristallisiert, Cellulose ohne Ausbildung eines Derivates in einem organischen Lösungsmittel aufzulösen und aus dieser Lösung Formkörper zu extrudieren. Fasern, welche aus solchen Lösungen ersponnen werden, erhielten von der BISFA (The International Bureau for the Standardization of man made fibers) den Gattungsnamen Lyocell zugeteilt, wobei unter einem organischen Lösungsmittel ein Gemisch aus einer organischen Chemikalie und Wasser verstanden wird. Weiters sind solche Fasern auch unter dem Begriff "lösungsmittelgesponnene Fasern" bekannt.

Es hat sich herausgestellt, daß sich als organisches Lösungsmittel insbesondere ein Gemisch aus einem tertiären Aminoxid und Wasser hervorragend zur Herstellung von Lyocell-Fasern bzw. anderen Formkörpern eignet. Als Aminoxid wird dabei vorwiegend N-Methylmorpholin-N-oxid (NMMO) verwendet. Andere geeignete Aminoxide sind in der EP-A 0 553 070 geoffenbart. Verfahren zur Herstellung cellulosischer Formkörper aus einer Lösung der Cellulose in einem Gemisch aus NMMO und Wasser sind z.B. in der US-PS 4,246,221 oder in der PCT-WO 93/19230 geoffenbart. Dabei wird die Celluloselösung aus einer Spinndüse extrudiert, in einem Luftspalt verstreckt und aus der Lösung in einem wäßrigen Fällbad ausgefällt. Dieses Verfahren wird im folgenden als "Aminoxidverfahren" oder "Lyocellverfahren" bezeichnet, wobei mit der Abkürzung "NMMO" im folgenden sämtliche tertiäre Aminoxide gemeint sind, die Cellulose lösen können. Nach dem Aminoxidverfahren hergestellte Fasern zeichnen sich durch eine hohe Faserfestigkeit im konditionierten sowie im nassen Zustand, einen hohen Naßmodul und eine hohe Schlingenfestigkeit aus.

Die Cellulose wird aus der Lösung in einem wäßrigen Spinnbad ausgefällt. Dabei reichert sich das Spinnbad an NMMO an. Der Gehalt an NMMO in den aus den Spinnbädern sowie an sonstigen Stellen des Aminoxidverfahrens anfallenden Prozeßwässern (z.B. Waschwässern) beträgt dabei bis zu 30 Gew.%. Für die Wirtschaftlichkeit des Aminoxidverfahrens ist es von entscheidender Bedeutung, daß das NMMO nahezu vollständig zurückgewonnen und wiederverwendet wird.

Gleichzeitig mit dem NMMO reichem sich im Spinnbad jedoch auch farblose bis stark gefärbte Abbauprodukte aus dem Aminoxidverfahren an, die einerseits die Qualität der hergestellten Formkörper beeinträchtigen können und andererseits ein Sicherheitsrisiko darstellen können, da NMMO unter gewissen Bedingungen zu stark exothermen Zersetzungsreaktionen neigt. Diese Substanzen müssen vor der Aufkonzentrierung aus der wässerigen Lösung des Aminoxides entfernt werden.

So enthalten die Lösungen des Aminoxides zumeist anorganische Kationen und Anionen wie z.B. Kationen von Natrium, Calcium und Magnesium bzw. Chlorid, Sulfat, etc., die zum Teil aus dem im Verfahren zur Herstellung von cellulosischen Formkörpern eingesetzten Zellstoff und andererseits aus anderen im Prozeß eingesetzten oder gebildeten Substanzen stammen. Diese Ionen reichern sich bei der Eindampfung und Aufkonzentrierung der Lösungen zu wieder im Verfahren einsetzbaren konzentrierten wässerigen Lösungen des Aminoxides an und führen in weiterer Folge zu Niederschlägen und Verkrustungen in der Eindampfanlage.

Auch Metallionen und Metallpartikel, die ebenfalls aus dem eingesetzten Zellstoff, aber auch aus dem Abrieb der im Verfahren eingesetzten metallischen Apparateteile stammen können, reichem sich in den Lösungen an. Es ist bekannt, daß eben diese metallischen Teilchen in Lösungen der Cellulose in wässerigen Aminoxiden zu oftmals heftigen Abbaureaktionen sowohl des Aminoxides als auch der Cellulose führen können.

Farbstoffe, die z.B. aus dem Abbau von im Aminoxidverfahren eingesetzten Verbindungen zur Stabilisierung der Celluloselösung, aus Begleitsubstanzen des eingesetzten Zellstoffes sowie insbesondere aus Abbaureaktionen des eingesetzten Aminoxides stammen, beeinträchtigen ebenfalls die Durchführung des Aminoxidverfahrens und insbesondere die Qualität der nach dem Verfahren hergestellten cellulosischen Formkörper.

In den Lösungen befinden sich weiters organische Anionen, die zum Beispiel aus Abbaureaktionen des tertiären Aminoxides und der Cellulose stammen.

Weiters wurde festgestellt, daß sich in den Prozeßwässern des Aminoxidverfahrens auch biologische Störstoffe, wie z.B. Bakterien, Hefen und Pilze bilden können, die Wandbeläge bilden und zu einer Verstopfung von Rohrleitungen u.ä. führen können.

Bei den Verunreinigungen kann es sich z.B. auch um Hemicellulosen wie z.B. Pentosane handeln, die über das Spinnbad in den NMMO-Kreislauf gelangen. Aber auch Pigmente oder sonstige Verunreinigungen aus Waschwässern und dem Spinnbad können sich in der zu reinigenden Lösung befinden.

Die aufgezählten Störstoffe befinden sich zum Teil gelöst, zum Teil jedoch auch als feste Verunreinigungen sowie in kolloidaler Form, als sogenannte Trübstoffe in der Lösung.

Um die Wirtschaftlichkeit und Sicherheit des Aminoxidverfahrens zu gewährleisten, ist es nun notwendig, insbesondere auch feste Verunreinigungen sowie Trübstoffe möglichst vollständig aus der zu reinigenden Lösung abzutrennen. Im folgenden wird der Begriff "Trübstoffe" sowohl für kolloidale Trübstoffe als auch sonstige feste Verunreinigungen verwendet.

In dieser Beziehung wird in der PCT-WO 93/11287 vorgeschlagen, in der Lösung suspendierte Feststoffe vor dem Passieren eines Ionentauschers aus der Lösung zu entfernen. Dies kann mittels einer Filtration geschehen, wobei gemäß der PCT-WO 93/11287 nur eine grobe Filtration notwendig ist.

In der PCT-WO 97/07268 wird gezeigt, daß eine grobe Filtration zur Abtrennung der festen Trübstoffe unzureichend ist. Die PCT-WO 97/07268 schlägt daher eine Agglomeration der Trübstoffe, insbesondere mittels eines Flockungsmittels, und das anschließende Entfernen der Trübstoffe mittels einer Filtration vor. Die dabei erhaltene wäßrige Lösung wird dann mit einem Ionenaustauscher in Kontakt gebracht.

Für die wirtschaftliche Effizienz eines Verfahrens zur Reinigung bzw. Aufarbeitung von wässerigen NMMO-Lösungen sind insbesondere die Standzeiten relevant, welche beim Betrieb der Filteraggregate zur Abtrennung der Trübstoffe erzielt werden können. Wichtig ist aber auch eine Erhöhung der Standzeiten der nachgeschalteten Ionenaustauscher. Dabei zeigt sich, daß nach wie vor ein Bedürfnis besteht, diese Standzeiten zu erhöhen oder im besten Fall überhaupt auf Filteraggregate zur Abtrennung der festen Verunreinigungen und Trübstoffe verzichten zu können.

Diese Aufgabe wird durch das Verfahren der vorliegenden Erfindung gelöst, welches dadurch gekennzeichnet ist, daß die Trübstoffe und Verunreinigungen aus der Lösung zumindest teilweise mittels eines Flotationsverfahrens abgetrennt werden.

Es hat sich überraschenderweise gezeigt, daß mit einem Flotationsverfahren die oben beschriebenen Trübstoffe verschiedenster Provenienz hervorragend aus der wäßrigen Lösung des Aminoxides abgetrennt werden können.

Das Prinzip der Flotation beruht bekanntermaßen auf der Adhäsion von Teilchen und Agglomeraten an Gasblasen in Flüssigkeiten. Dabei steigen die an den Gasblasen anhaftenden Teilchen an die Oberfläche, wo sich ein Schaumpolster ausbildet. Dieser Schaumpolster kann von der Oberfläche der Lösung abgezogen werden. Im Falle des Einsatzes eines Flotationsverfahrens zur Abtrennung von Trübstoffen aus zu reinigenden NMMO-Lösungen aus dem Aminoxidverfahren hat sich gezeigt, daß die Trübstoffe sehr wirksam aus der Lösung entfernt werden können und damit die Standzeiten nachgeschalteter Aggregate, z.B. von Filtrationsaggregaten sowie Ionenaustauschern, deutlich erhöht werden können.

Eine bevorzugte Ausführungsform des erfindungsgemäßen Verfahrens besteht darin, daß die Trübstoffe und Verunreinigungen mittels einer Druckentspannungsflotation abgetrennt werden. Es ist jedoch auch die Anwendung anderer, dem Fachmann bekannter Verfahren zur Flotation, z.B. einer Flotation in Rührwerkzellen (mit oder ohne Druckluftzufuhr), einer Flotation in Druckluftzellen (wobei die Luft über poröse Wände zugeführt wird), einer Elektroflotation oder einer Mikroflotation möglich.

Eine weitere bevorzugte Ausführungsform des erfindungsgemäßen Verfahrens ist dadurch gekennzeichnet, daß die Trübstoffe und Verunreinigungen vor der Flotation agglomeriert werden. Dies wird bevorzugt dadurch erreicht, daß der wässerigen Lösung vor der Flotation ein Flockungsmittel zugegeben wird.

Geeignet als Flockungsmittel sind z.B. die in der PCT-WO 97/07268 beschriebenen Substanzen oder auch Bentonite bzw. Substanzgemische. Diese Flockungsmittel wirken im Flotationsverfahren auch als Sammler, d.h. als Flotationshilfsmittel. Die zusätzliche Zugabe von Flotationshilfsmitteln wie z.B. Schäumern und Reglern ist in der Regel nicht notwendig.

Zur vollständigen Abtrennung der Trübstoffe und festen Verunreinigungen kann die wässerige Lösung nach der Flotation einer Filtration unterzogen werden. Hierfür geeignete Methoden und Aggregate sind z.B. in der PCT-WO 97/07268 beschrieben.

Im Flotat (dem abgezogenen schaumförmigen Teil der Lösung, welcher die agglomerierten Trübstoffe enthält) können sich noch substantielle Mengen an wässerigem Aminoxid befinden. Dieses wird in einer vorteilhaften Ausführungsform des erfindungsgemäßen Verfahrens vom Flotat abgetrennt und wieder der wässerigen Lösung zugeführt.

Zur weiteren Reinigung der wässerigen Lösung nach dem Abtrennen der Trübstoffe und Verunreinigungen ist es bevorzugt, daß die Lösung durch Maßnahmen zur Adsorption und/oder zum Ionenaustausch weiter gereinigt wird. Diesbezügliche Verfahren sind z.B. in der EP 0 488 988 sowie in der PCT-WO 95/23827 beschrieben.

Das erfindungsgemäße Verfahren eignet sich insbesondere zur Aufarbeitung von Prozeßwässern, die im Aminoxidverfahren anfallen. Es ist hier wie oben beschrieben sehr wichtig, daß die gebrauchte NMMO-Lösung für einen erneuten Einsatz im Aminoxidverfahren von allen gelösten und ungelösten Verunreinigungen befreit wird. Mit dem Einsatz eines Flotationsverfahrens zur Abtrennung von Trübstoffen ist dies nun in noch besserer Weise möglich.

Die gemäß dem erfindungsgemäßen Verfahren gereinigte Lösung wird daher bevorzugt wieder dem Verfahren zur Herstellung cellulosischer Formkörper zugeführt.

### Beispiele:

Allgemeine Beschreibung des eingesetzten Flotationsverfahrens:

In einem geeigneten Behältnis wird Luft mit feinster Bläschengröße (30 µm bis 50 µm) gut verteilt in die zu reinigende NMMO-Lösung eingebracht. Die Trübstoffe, welche zum Teil z.B. mittels vorheriger Zugabe von Flockungsmittel agglomeriert sind, bleiben an den Luftbläschen haften und steigen an die Flüssigkeitsoberfläche. An der Oberfläche bildet sich ein Schaumpolster aus, mit dem die agglomerierten Trübstoffe abgezogen und als Flotat ausgetragen werden können. Das im Flotat enthaltende NMMO kann z.B. durch Zentrifugieren oder Abpressen des Flotates rückgewonnen werden.

Allgemeine Bedingungen zur Druckentspannungsflotation:

| | |
|---|---|
| NMMO-Konzentration | 15-25% |
| Zugabe von Flockungsmittel | stark kationisch (z.B. Praestol BC853, Hersteller: Fa. Stockhausen; A7112, Hersteller: Fa. Stockhausen; Alzofix P9, Hersteller: Fa. Trostberg) |
| Agglomerationszeit | 15 - 30 Minuten |
| Luftmenge | 20 - 30 l / m³ Flüssigkeit |
| Druck | 4 - 5 bar |

Es zeigt sich, daß im erfindungsgemäßen Verfahren auf den Einsatz von Flotationshilfsmitteln verzichtet werden kann.

### Beispiel 1:

Eine aus dem Aminoxidverfahren stammende verunreinigte wäßrige NMMO-Lösung wurde einer Flotation gemäß den oben angegebenen Bedingungen unterzogen. Von der Lösung wurden jeweils vor bzw. nach dem Flotationsverfahren der Trübstoffgehalt (FTU-Formazin Turbidity Units) gemäß dem in der PCT-WO 97/07268 beschriebenen Meßverfahren, der Feststoffgehalt (Trockenrückstand einer Filtration über eine 0,45 µm-Membrane) und der Filterwert (Gramm filtrierte Lösung nach 3 Minuten Filtration über eine 0,45 µm-Membrane) bestimmt.

In der folgenden Tabelle sind die erzielten Ergebnisse aufgelistet:

| | Trübe (FTU) | Feststoffgehalt (mg/l) | Filterwert (g Filtrat nach 3 Minuten) |
|---|---|---|---|
| Lösung vor der Flotation | 22 | 676 | 35,4 |
| Lösung nach der Flotation | 3,1 | 6,4 | 246 |

Es zeigt sich deutlich, daß sich mit dem erfindungsgemäß vorgesehenen Flotationsverfahren der Großteil der enthaltenen Trübstoffe aus der Lösung entfernen läßt.

Wenn in einer kontinuierlich arbeitenden Pilotanlage zur Herstellung cellulosischer Formkörper nach dem Aminoxidverfahren eine Flotationsstufe zur Vorreinigung der gebrauchten NMMO-Lösung eingesetzt wird, können die Standzeiten der nachgeschalteten Filtrationsaggregate um das ca. 5-fache erhöht werden. Es wird damit insbesondere möglich, kleinere und daher kostengünstigere Filtrationsaggregate einzusetzen.

## Patentansprüche

1. Verfahren zur Aufarbeitung bzw. Reinigung von wässerigen Lösungen eines tertiären Aminoxides, insbesondere von in der Herstellung von cellulosischen Formkörpern anfallenden Prozeßwässem, z.B. gebrauchten Fällbädern, umfassend die Abtrennung von Trübstoffen und festen Verunreinigungen aus der Lösung, **dadurch gekennzeichnet, daß** die Trübstoffe und Verunreinigungen zumindest teilweise mittels eines Flotationsverfahrens abgetrennt werden.

2. Verfahren gemäß Anspruch 1, daß die Trübstoffe und Verunreinigungen mittels einer Druckentspannungsflotation abgetrennt werden.

3. Verfahren gemäß Anspruch 1 oder 2, **dadurch gekennzeichnet, daß** die Trübstoffe und Verunreinigungen vor der Flotation agglomeriert werden.

4. Verfahren gemäß Anspruch 3, **dadurch gekennzeichnet, daß** der wässerigen Lösung vor der Flotation ein Flockungsmittel zugegeben wird.

5. Verfahren gemäß einem der vorhergehenden Ansprüche, **dadurch gekennzeichnet, daß** die wässerige Lösung nach dem Flotationsverfahren einer Filtration unterzogen wird.

6. Verfahren gemäß einem der vorhergehenden Ansprüche, **dadurch gekennzeichnet, daß** im Flotat befindliches wässeriges Aminoxid vom Flotat abgetrennt und wieder der wässerigen Lösung zugeführt wird.

7. Verfahren gemäß einem der vorhergehenden Ansprüche, **dadurch gekennzeichnet, daß** die wässerige Lösung nach dem Abtrennen der Trübstoffe und Verunreinigungen durch Maßnahmen zur Adsorption und/oder zum Ionenaustausch weiter gereinigt wird.

8. Verfahren gemäß einem der vorhergehenden Ansprüche zur Aufarbeitung bzw. Reinigung von in der Herstellung von cellulosischen Formkörpern anfallenden Prozeßwässern, z.B. gebrauchten Fällbädem, **dadurch gekennzeichnet, daß** die gereinigte Lösung wieder dem Verfahren zur Herstellung cellulosischer Formkörper zugeführt wird.

## Claims

1. A process for the reprocessing respectively purification of aqueous solutions of a tertiary amine oxide, particularly for process waters which occur during the production of cellulosic moulded bodies, e.g. used precipitation baths, comprising the separation of turbidifying agents and solid impurities from the solution, **characterized in that** the turbidifying agents and impurities are at least partly separated by means of a flotation process.

2. A process according to claim 1, **characterized in that** the turbidifying agents and impurities are separated using pressure relaxation flotation.

3. A process according to claim 1 or 2, **characterized in that** the turbidifying agents and impurities are agglomerated prior to flotation.

4. A process according to claim 3, **characterized in that** a flocculant is added to the aqueous solution prior to flotation.

5. A process according to any of the preceding claims, **characterized in that** the aqueous solution is subjected to filtration after the flotation process.

6. A process according to any of the preceding claims, **characterized in that** aqueous amine oxide in the flotation concentrate is separated from the flotation concentrate and led back to the aqueous solution.

7. A process according to any of the preceding claims, **characterized in that** the aqueous solution is further purified after separating the turbidifying agents and impurities by measures for adsorption and/or ion exchange.

8. A process according to any of the preceding claims for the reprocessing and/or purification of process waters which occur during the production of cellulosic moulded bodies, e.g. used precipitation baths, **characterized in that** the purified solution is led back to the process for the production of cellulosic moulded bodies.

## Revendications

1. Procédé de traitement et de purification de solutions aqueuses d'un aminoxyde tertiaire, en particulier d'eaux de processus produites dans la fabrication de corps moulés cellulosiques, par exemple des bains de précipitation usés, comprenant la séparation de produits de turbidité et d'impuretés solides à partir de la solution, **caractérisé en ce que** les produits de turbidité et les impuretés sont séparés au moins partiellement, en utilisant un procédé de flottation.

2. Procédé selon la revendication 1, **caractérisé en ce que** les substances de turbidité et les impuretés sont séparés en utilisant une flottation par détente de pression.

3. Procédé selon la revendication 1 ou 2, **caractérisé en ce que** les substances de turbidité et les impuretés sont agglomérées avant la flottation.

4. Procédé selon la revendication 3, **caractérisé en ce qu'**un agent floculant est ajouté à la solution aqueuse avant la flottation.

5. Procédé selon l'une des revendications précédentes, **caractérisé en ce que** la solution aqueuse est soumise à une filtration, après le processus de flottation.

6. Procédé selon l'une des revendications précédentes, **caractérisé en ce que** l'aminoxyde aqueuse se trouvant dans le flottat est séparé de ce flottat et recyclé dans la solution aqueuse.

7. Procédé selon l'une des revendications précédentes, **caractérisé en ce que** la solution aqueuse, après séparation des substances de turbidité et des impuretés, est soumise à une épuration supplémentaire, par des dispositions visant à produire une adsorption et un échange d'ions.

8. Procédé selon l'une des revendications précédentes, de traitement et de purification d'eaux de processus, par exemple des bains de précipitation usés, produites dans la fabrication de corps moulés cellulosiques, **caractérisé en ce que** la solution épurée est retournée au procédé de fabrication de corps moulés cellulosiques.
